# EUROPÄISCHE PATENTSCHRIFT

(11) **EP 2 039 605 B1**
(45) Veröffentlichungstag und Bekanntmachung des Hinweises auf die Patenterteilung: **22.05.2019**
(21) Anmeldenummer: 08016481.7
(22) Anmeldetag: 18.09.2008
(51) Int. Cl.: B64D 45/00

(54) **Flugzeughochauftriebssystem mit Überlastsicherung**
Aircraft high-lift device system with overload protection
Système hypersustentateur d'avion avec protection de surcharge

(30) Priorität: 19.09.2007 DE 102007044642
(43) Veröffentlichungstag der Anmeldung: 25.03.2009
(73) Patentinhaber: Liebherr-Aerospace Lindenberg GmbH, 88161 Lindenberg/Allgäu (DE)
(72) Erfinder: Schievelbusch, Bernd, 88161 Lindenberg (DE)
(74) Vertreter: Herrmann, Uwe

(56) Entgegenhaltungen:
- EP-A2- 1 052 168
- EP-A2- 1 321 359
- DE-A1- 10 353 672
- DE-A1-102004 055 740
- DE-B3- 10 308 301
- US-A- 4 575 027
- US-A- 4 745 815
- US-A- 5 071 397
- US-A1- 2004 200 677

## Beschreibung

Die vorliegende Erfindung betrifft ein Flugzeughochauftriebsystem mit wenigstens einer Antriebseinheit zum Betrieb der Hochauftriebssysteme der Halbflügel sowie mit wenigstens einer Überlastsicherung zur Vermeidung unerwünscht hoher Betriebsmomente in den Halbflügelsystemen.

Antriebssysteme beispielsweise für Vorflügel und Landeklappen an den Tragflächen von Flugzeugen bestehen häufig aus einer zentralen Antriebseinheit, die beispielsweise im Rumpf des Flugzeuges angeordnet ist. Die zentrale Antriebseinheit steht über ein Verzweigungsgetriebe mit Transmissionswellen in den Halbflügeln in Verbindung, die ihrerseits über Abzweiggetriebe das Moment zu den Klappen übertragen. Dabei sind den Abzweiggetrieben Aktuatoren und Führungsgetriebe nachgeschaltet, die die aerodynamisch wirkenden Klappen bewegen.

Betrachtet man das Drehmomentniveau pro Halbflügel von außen, d.h. von der Flügelspitze nach innen zur Flügelwurzel hin wird in den Transmissionswellen das Momentenniveau an jeder Laststation um das dort abgezweigte Moment vergrößert. An jedem wurzelseitigen Wellenende wirkt also die Hälfte des Betriebsmomentes der Antriebseinheit, die üblicherweise beide Halbflügel mit dem erforderlichen Drehmoment versorgt.

Die zentrale Antriebseinheit wird in der Regel auf das maximale auftretende Betriebsmoment bei Nenndrehzahl ausgelegt, nach Erreichen und Überschreiten des Nennleistungspunktes wird bei abnehmender Drehzahl noch ein Momentenüberschuss bis auf das Blockiermoment (Stallmoment) wirksam. Damit besitzt eine Antriebseinheit in konventioneller Auslegung etwa das 3fache an Momentenpotenzial wie zum Bewegen eines Halbflügels benötigt wird.

Fehlerfälle, die in den Halbflügeln auftreten und die möglichst umgehend erkannt werden müssen, sind der sogenannte Klemmfall (Jam), d.h. das Klemmen einer Komponente des Antriebsstrangs bzw. der Klappe selbst, sowie der Wellenbruch, der zur Folge hat, dass Klappen hinter der Bruchstelle nicht mehr korrekt positioniert werden können, was zu einem Asymmetriefehler führen kann.

Ohne Einsatz eines Drehmomentbegrenzers baut sich bei Auftreten eines Klemmfalles in der Reihe der leistungsübertragenden Bauelemente zwischen der zentralen Antriebseinheit und der Klemmstelle das volle Stallmoment der Antriebseinheit auf, was zur Folge hat, dass an der Klemmstelle selbst das gesamte Stallmoment bzw. die aus dem Stallmoment entstehende Stellkraft wirkt, was zu einer Beschädigung der mit dem Moment beaufschlagten Bauteile führen kann. Daher ist es aus dem Stand der Technik bekannt, Drehmomentbegrenzer einzusetzen, mittels derer die hohen Bauteilbeanspruchungen verhindert werden können. Mittels der Drehmomentbegrenzer werden die nachgeschalteten Bauteile des Abzweiggetriebes, des Führungsgetriebes und der Strukturbauteile vor diesen extremen Belastungen geschützt.

Diese Stationsdrehmomentbegrenzer haben dabei die Wirkung, dass sie das Moment der Antriebseinheit in die Flügelstruktur ableiten. Der Ansprechwert dieser so genannten Stationsdrehmomentbegrenzer liegt in der Regel bei etwa 130% des maximal zulässigen Betriebsmomentes der Station.

Aus dem Stand der Technik ist es des Weiteren bekannt, hinter der Verzweigungsstelle, jedoch wurzelnah zur Absenkung des Momentniveaus in den Transmissionen weitere so genannte Branch Torque Limiter oder auch Half System Torque Limiter einzubauen, die im Folgenden auch als Halbflügeldrehmomentbegrenzer bezeichnet werden. Diese werden durch die Stationsdrehmomentbegrenzer ausgelöst. Ihr Ansprechwert beträgt in der Regel etwa 130% des maximalen summierten Betriebsdrehmoments des Halbflügels.

Flugzeughochauftriebsysteme mit Überlastsicherung sind aus dem Stand der Technik bekannt.

Die DE 103 53 672 A1 beschreibt ein System, in dem durch Vergleich der Zustände im linken und rechten Flügel ein Klemmfall detektiert wird. Dabei werden die Augenblickszustände von Position, Geschwindigkeit, Beschleunigung oder Abtriebsleistung von Antriebseinheiten als zu beobachtende Kenngrößen genannt. Wird auf diese Weise ein Klemmfall erkannt, wird die Antriebseinheit abgeregelt, so dass ein weiterer Momentenanstieg im Transmissionssystem limitiert wird.

Aus DE 10 2004 055 740 A1 ist ein Flugzeughochauftriebsystem mit Überlastsicherung bekannt. Vorgesehen ist die Verwendung eines mittels einer schaltenden elektromechanischen Vorrichtung erzeugten Signals, das das Überschreiten eines Schwellwertes des Betriebsdrehmoments in der wurzelnahen Transmission des Halbflügels anzeigt. Wird auf diese Weise ein Klemmfall im Antriebsstrang eines Halbflügels erkannt, wird die Antriebseinheit abregelt. Der genannte Schwellwert liegt über dem maximalen Betriebsdrehmoment des Halbflügels.

DE 103 08 301 B3 beschreibt ebenfalls ein Flugzeughochauftriebsystem mit Überlastsicherung. Bei diesem System wird die Antriebseinheit nach Überschreiten eines Schwellwertes der kontinuierlich gemessenen Stellkraft zwischen dem Aktuator und dem Führungsgetriebe abgeregelt.

Die EP 1 321 359 B1 offenbart die konstruktiven Merkmale eines Differenzdrehmomentbegrenzers.

Wie oben ausgeführt, besteht ein weiterer Fehlerfall im Auftreten eines Wellenbruchs (Disconnect). Ein Wellenbruch führt zu einem sogenannten Asymmetriefehler, was insbesondere deshalb problematisch ist, da die unsymmetrische Veränderung der Auftriebs- und Widerstandskräfte an den Flügeln mit den primären Flugsteuerungsflächen (Querruder) nicht kompensiert werden können. Asymmetrie kann entstehen, wenn an einer beliebigen Stelle im Transmissionssystem eine Unterbrechung (Disconnect) auftritt, wodurch die Klappen bzw. die Landeklappen hinter der Bruchstelle nicht mehr kontrolliert positioniert werden können.

Im Stand der Technik ist zur Erkennung des Wellenbruches vorgesehen, dass die Positionen der Wellensysteme im linken und rechten Flügel kontinuierlich gemessen und verglichen werden. Bei Überschreiten eines Schwellwertes der Positionsdifferenz wird eine Unterbrechung (Disconnect) im Antriebsstrang angenommen, und das System wird stillgesetzt.

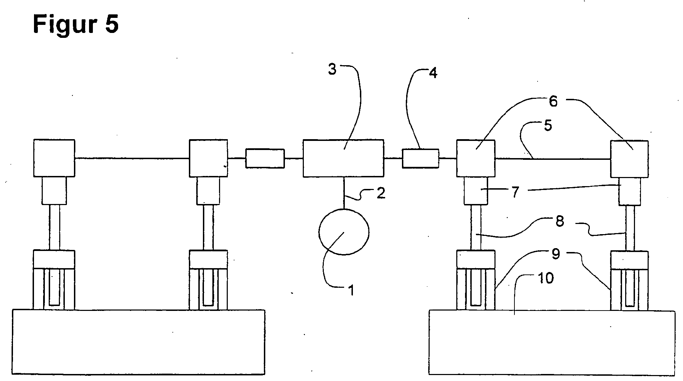

Figur 5 zeigt ein aus dem Stand der Technik bekanntes Flugzeughochauftriebsystem mit Überlastsicherung.

Die Antriebsleistung der zentralen Antriebseinheit 1 wird über die Zentralwelle 2 an das Verzweigungsgetriebe 3 geführt. Im Verzweigungsgetriebe 3 wird die Antriebsleistung in die Transmissionen 5, des linken und des rechten Halbflügels verteilt. Der Einfachheit halber sind in Figur 5 nur die Bauelemente des rechten Halbflügels mit Bezugszeichen versehen. Der linke Halbflügel weist einen spiegelsymmetrisch identischen Aufbau auf.

Der Halbsystemdrehmomentbegrenzer 4 schützt im Klemmfall die nachfolgenden Elemente des Halbflügels vor unzulässig hohen Belastungen. Diesem nachgeschaltet sind die Abzweiggetriebe 6, die dem Transmissionsstrang 5 die für die Bewegung der Aktuatoren 8 benötigte Leistung entnehmen. Die Aktuatoren 8 wandeln die Rotation der Abzweiggetriebe 6 in translatorische Stellbewegungen. Mittels der Führungsgetriebe 9 wird die Stellkraft auf die jeweilige Landeklappe 10 übertragen. Des Weiteren bestimmen sie den kinematischen Verlauf des Stellvorgangs.

Wie dies des Weiteren aus Figur 5 hervorgeht, sind am Ausgang der Abzweiggetriebe 6 Stationsdrehmomentbegrenzer 7 vorgesehen, die die Bauelemente der Station vor unzulässig hohen Belastungen schützen.

Kommt es beispielsweise zu einem Klemmen im Führungsgetriebe 9 der äußeren rechten Station wird die Last im zugehörigen Aktuator 8 ansteigen, bis der Stationsdrehmomentbegrenzer 7 dieser Station anspricht und die Antriebsmomente in die Struktur ableitet. Da die Antriebseinheit 1 jedoch weiter arbeitet, steigt das Drehmoment im Transmissionsstrang 5 weiter an, bis der Halbflügeldrehmomentbegrenzer 4 anspricht, und das Antriebsmoment in die Struktur ableitet.

In diesem Zustand ist das System blockiert, und im Transmissionsstrang 5 zwischen Antriebseinheit 1 und Halbflügeldrehmomentbegrenzer 4 ist das Stallmoment, d.h. das maximal mögliche Betriebsmoment eingespannt. Zwischen Halbflügeldrehmomentbegrenzer 4 und Stationsdrehmomentbegrenzer 7 ist ein Moment von ca. 130% des maximalen Halbflügelbetriebsdrehmoments eingespannt und im Strang zwischen Stationsdrehmomentbegrenzer 7 und der Klemmstelle ca. 130% des maximalen Stationsdrehmomentes bzw. der daraus resultierenden Stellkraft.

Ein derartiges System arbeitet sowohl mit ungeregelten wie geregelten Antriebseinheiten.

Wie oben ausgeführt und wie aus Figur 5 ersichtlich, enthält eine Systemtopologie gemäß dem Stand der Technik also zum Schutz der Komponenten vor zu hohen Drehmomenten / Stellkräften eine Vielzahl von komplexen mechanischen Geräten, die den Systempreis und das Gewicht erhöhen, gleichzeitig auch wegen der erhöhten Komplexität die Systemverfügbarkeit beeinträchtigen.

Der vorliegenden Erfindung liegt daher die Aufgabe zugrunde, ein Flugzeughochauftriebsystem mit Überlastsicherung bereitzustellen, dessen Komplexität gegenüber vorbekannten Systemen verringert ist.

Diese Aufgabe wird durch ein Flugzeughochauftriebsystem mit den Merkmalen des Anspruchs 1 gelöst.

Danach ist vorgesehen, dass die Überlastsicherung eine Vergleichseinrichtung aufweist, - die an beiden Halbflügeln einen Drehmomentsensor an dem wurzelseitigen Ende einer Transmission des Halbflügels umfasst, und die Überlastsicherung eine Begrenzungseinrichtung aufweist, die mit der Vergleichseinrichtung in Verbindung steht und mittels derer die Antriebseinheit blockierbar, abschaltbar oder abregelbar ist und/oder das Moment der Antriebseinheit in die Flugzeugstruktur ableitbar ist, wobei die Vergleichseinrichtung durch eine elektronische Auswerteeinheit gebildet ist, die in Verbindung mit den Drehmomentsensoren und mit der Begrenzungseinrichtung steht, und die dazu ausgelegt ist, die Augenblickswerte dieser Drehmomente zu vergleichen, eine Differenz zwischen den Drehmomenten festzustellen, diese Differenz mit einem Grenzwert zu vergleichen, und, wenn diese Differenz den Grenzwert übersteigt, die Begrenzungseinrichtung zu betätigen, um die Antriebseinheit zu blockieren, abzuschalten oder abzregeln und/oder das Moment der Antriebseinheit in die Flugzeugstruktur abzuleiten.

Erfindungsgemäß ist somit vorgesehen, dass die Differenz der Betriebsmomente der Halbflügelsysteme verglichen wird und dass auf dieser Grundlage ggf. ein weiterer Anstieg des Betriebsmomentes verhindert oder möglichst gering gehalten wird.

Erfindungsgemäß ist in jedem der Halbflügel wenigstens ein Drehmomentsensor vorgesehen, der mit der Vergleichseinrichtung in Verbindung steht.

Der oder die Drehmomentsensoren sind an den wurzelseitigen Enden der Halbflügel angeordnet.

Die Vergleichseinrichtung wird durch eine elektronische Auswerteeinheit gebildet, die mit der Antriebseinheit in Verbindung steht und diese z.B. abregelt, wenn in in der elektronischen Auswerteeinheit festgestellt wird, dass die Differenz der Drehmomente einen Grenzwert übersteigt.

Eine geringe Komplexität des Systems ergibt sich, wenn keine Halbflügeldrehmomentbegrenzer und/oder wenn keine Stationsdrehmomentbegrenzer vorgesehen sind.

Die Vergleichseinrichtung und die Begrenzungseinrichtung können durch zwei unterschiedliche oder durch ein und dasselbe Bauteil oder auch durch eine Baugruppe gebildet werden.

Das erfindungsgemäße System kann in dieser Konfiguration mit Einsatz einer elektronisch arbeitenden Vergleichseinheit durch die Überwachung der Momentdifferenz auch eine Unterbrechung in einem der Antriebsstränge erkennen, da in einem solchen Fall das Betriebsmoment im Strang um den Anteil des abgetrennten Systemteiles vermindert wird. Diese Erkennung erfolgt bei einer deutlich geringeren Positionsdifferenz der beiden Systemhälften als bei aus dem Stand der Technik bekannten Systemen.

Es sind Systemtopologien bekannt, die an den Laststationen redundante Lastpfade erfordern. Diese Forderung wird durch die parallele Anordnung von zwei Aktuatoren sowie eventuell auch von zwei Führungsgetrieben erfüllt.

Bei einer solchen Systemanordnung besteht ein möglicher Nachteil darin, dass es zu einem Kraftkonflikt zwischen den Antriebssträngen kommen kann, der durch Toleranzen in den lasttragenden Bauteilen verursacht wird und der wegen des geschlossenen Momentenkreises nicht ausgeglichen werden kann. Grundsätzlich lässt sich dieses Problem durch ein Differentialgetriebe im Abzweiggetriebe lösen (DE 10 2004 047 098 A1), jedoch besteht ein Nachteil darin, dass ein Differentialgetriebe technisch vergleichsweise aufwendig ist.

Somit ist in einer weiteren Ausgestaltung der vorliegenden Erfindung vorgesehen, dass in einem, mehreren oder allen Abzweiggetrieben redundanter Lastpfade die Vergleichseinrichtung angeordnet ist. Die Erfindung ist nicht auf den Vergleich der Betriebsmomente zwischen den beiden Halbflügeln beschränkt, sondern erfaßt auch den Vergleich von Betriebsmomenten innerhalb eines Halbflügels.

Weitere Einzelheiten und Vorteile der Erfindung werden anhand eines in der Zeichnung dargestellten Ausführungsbeispiels näher erläutert.

Es zeigen:
- Figur 1:: eine schematische Darstellung eines Antriebssystems gemäß der vorliegenden Erfindung mit elektronischem Drehmomentbegrenzer,

- Figur 2:: eine schematische Darstellung eines Antriebssystems mit mechanisch wirkendem Drehmomentbegrenzer (nicht von der Erfindung umfasst),
- Figur 3:: eine schematische Darstellung eines mechanisch wirkenden Drehmomentbegrenzers (nicht von der Erfindung umfasst),
- Figur 4:: eine schematische Darstellung eines Antriebssystems gemäß der vorliegenden Erfindung mit redundanten Lastpfaden und
- Figur 5:: eine schematische Darstellung eines Antriebssystems nach dem Stand der Technik.

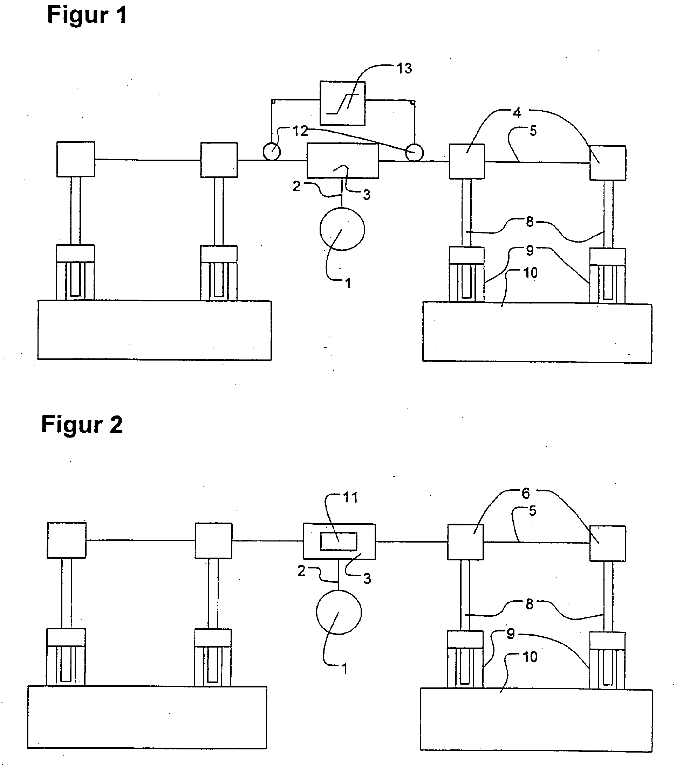

In den Figuren 1, 2, 4 und 5 sind die für die Erfindung wesentlichen Elemente eines Hochauftriebssystems schematisch dargestellt. Alle Elemente des Systems, die zur Realisierung des Überlastschutzes / Asymmetrieschutzes nicht unmittelbar beitragen, sind nicht dargestellt. Aus Gründen der Übersichtlichkeit ist ein sehr einfaches System gezeigt, die Erfindung ist aber auf komplexere Systeme der Hinterkanten-Klappen wie auch der Vorflügelsysteme anwendbar.

Figur 1 zeigt ein Antriebssystem mit einer Überlastsicherung gemäß der Erfindung.

Wie dies aus Figur 1 hervorgeht, sind die aus dem Stand der Technik bekannten Halbsystemdrehmomentbegrenzer sowie die Stationsdrehmomentbegrenzer nicht vorhanden.

Mit dem Bezugszeichen 1 ist eine zentrale Antriebseinheit gekennzeichnet, die zur Verstellung der Landeklappen 10 beider Flügel eines Flugzeuges dient. Grundsätzlich ist die vorliegende Erfindung nicht auf Landeklappen beschränkt, sondern umfaßt die Betätigung bzw. Fehlererkennung von beliebigen Klappen oder Klappensystemen.

Die Antriebseinheit 1 treibt eine Zentralwelle 2 an, die mit dem Verzweigungsgetriebe 3 in Verbindung steht. Mittels des Verzeigungsgetriebes 3 wird die Antriebsleistung der Antriebseinheit 1 in die Transmissionen 5 beider dargestellten Flügelhälften verteilt. Die Abzweiggetriebe 4 entnehmen der Transmission die für die Bewegung der Aktuatoren 8 benötigte Leistung. Mittels der Aktuatoren 8 wird die Rotationsbewegung der Abzweiggetriebe 4 in eine translatorische Bewegung umgewandelt.

Mit dem Bezugszeichen 9 sind Führungsgetriebe gekennzeichnet, mittels derer die Stellkraft auf die Landeklappe 10 übertragen wird. Des Weiteren bestimmten die Führungsgetriebe 9 den kinematischen Verlauf des Stellvorgangs der Landeklappe 10.

Wie dies des Weiteren aus Figur 1 hervorgeht, sind an den wurzelseitigen Enden der Transmissionen 5 beider Halbflügel Sensoren 12 angeordnet, mittels derer kontinuierlich das aktuelle Drehmoment in beiden Halbflügeln gemessen wird. Denkbar ist beispielsweise der Einsatz von Drehmomentsensoren, wie sie beispielsweise aus der DE 103 53 672 A1 bekannt sind.

Die mittels der Sensoren 12 gemessenen Werte der Drehmomente werden an eine elektronische Auswerteeinheit 13 übertragen, die die Differenz beider Drehmomente bildet. Wird in der Auswerteeinheit 13 festgestellt, dass die Differenz einen bestimmten Grenzwert übersteigt, wird die Antriebseinheit 1 abgeschaltet bzw. ein Abschaltealgorithmus eingeleitet.

Wird in der Auswerteeinheit 13 eine Drehmomentdifferenz festgestellt, die einen Grenzwert übersteigt, wird somit auf den Klemmfall geschlossen, d.h. auf das Auftreten des Klemmens eines oder mehrerer der leistungsübertragenden Bauelemente. Aufgrund des Abregelvorgangs der Antriebseinheit 1 wird ein weiterer Drehmomentanstieg zwischen der Antriebseinheit 1 und der Klemmstelle auftreten, jedoch fällt dieser kleiner aus, als dies aus dem Stand der Technik bekannt ist, was darauf zurückzuführen ist, dass der Beginn des Klemmvorgangs durch die erfindungsgemäße Ausgestaltung des Systems deutlich früher erkannt wird.

Im Vergleich zu den Systemen aus DE 10 2004 055 740 A1 und DE 103 08 301 B3 wird der Beginn des Klemmvorgangs deutlich früher erkannt, weil die Differenz der Betriebsmomente unabhängig vom Augenblickswert erkannt wird. Damit ist im Vergleich zu DE 10 2004 055 740 A1 und DE 103 08 301 B3 eine geringere maximale Momentenbeanspruchung der Elemente des Antriebssystems realisierbar.

Figur 2 zeigt ein Antriebssystem , das nicht unter die Erfindung fällt, ebenfalls ohne Halbsystemdrehmomentbegrenzer sowie ohne Stationsdrehmomentbegrenzer. Abweichend von dem System gemäß Figur 1 ist ein mechanisch wirkender Drehmomentbegrenzer 11 vorgesehen. Dieser ist in das Verzweigungsgetriebe 3 integriert. Sobald eine bestimmte Differenz in den Betriebsdrehmomenten in den Transmissionswellen 5 der Halbflügel auftritt, leitet der Drehmomentbegrenzer 11 das Antriebsmoment der Antriebseinheit 1 in die Struktur ab.

Tritt ein Klemmfall ein, liegt nach dem Stillstand des Systems folgende Situation vor:
Zwischen Antriebseinheit 1 und dem Verzweigungsgetriebe 3 liegt in der zentralen Antriebswelle 2 das Stallmoment, d.h. das maximale Blockiermoment im Falle des Klemmens an.

In dem Transmissionsstrang liegt bis zur Klemmstelle das zuletzt wirkende Betriebsmoment an, das um den Ansprechwert des Drehmomentbegrenzers 11 erhöht ist. In dem Transmissionsstrang, in dem keine Klemmstelle vorliegt, liegt das zuletzt wirkende Betriebsmoment an.

Die stationären und transienten Betriebslasten sind in der Systemtopologie gemäß Figur 2 im Vergleich zu den Systemarchitekturen gemäß Figur 5 reduziert.

Aufgrund der Tatsache, dass der Drehmomentbegrenzer mechanisch arbeitet, kann das System gemäß Figur 2 mit geregelten sowie auch mit ungeregelten Antriebseinheiten eingesetzt werden.

Tritt ein Wellenbruch ein, entsteht durch den Wegfall der Stationsdrehmomente eine Momentdifferenz mit umgekehrten Vorzeichen.

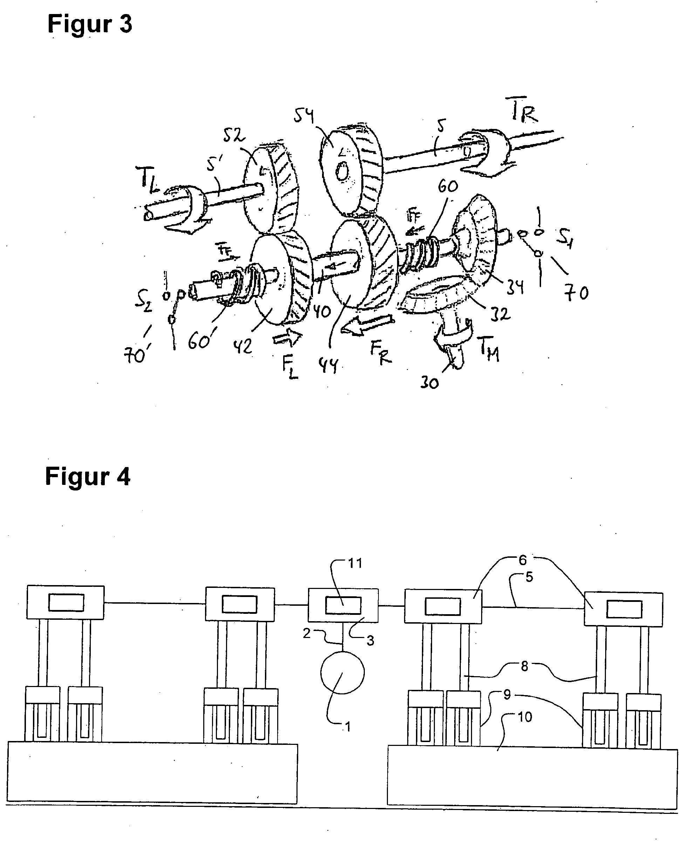

Figur 3 zeigt ein Verzweigungsgetriebe 3 mit integriertem mechanisch wirkenden Drehmomentbegrenzer, das in einer Systemtopologie gemäß Figur 2 eingesetzt wird.

Wie dies aus Figur 3 hervorgeht, werden die Drehmomente des linken Halbflügels (T_{L}) und des rechten Halbflügels (T_{R}) auf die miteinander fest verbundenen Ritzel übertragen, in der Ritzelwelle summiert und über das axial ortsfeste Kegelradpaar auf die Motorwelle geleitet.

Im Einzelnen gilt Folgendes:
Das Verzweigungsgetriebe 3 weist eine Motorwelle 30 auf, deren Leistung bzw. deren Moment über das ortsfeste Kegelradpaar 32, 34 auf die axial verschieblich angeordnete Ritzelwelle 40 übertragen wird. Auf der Ritzelwelle 40 befinden sich zwei auf der Ritzelwelle 40 ortsfest angeordnete, stirnseitig schräg verzahnte Ritzel 42, 44. Diese Kämmen mit zwei schrägverzahnten Stirnrädern 52, 54, von denen eines mit der Transmissionswelle 5 des rechten Halbflügels und eines mit der Transmissionswelle 5' des linken Halbflügels verbunden ist.

Die in den Transmissionen 5, 5' auftretenden Momente sind mit den Bezugszeichen T_{R} und T_{L} gekennzeichnet.

Die durch die Schrägverzahnungen auftretenden gegensinnigen axialen Kräfte, die auf die Ritzelwelle 40 wirken, sind mit den Bezugszeichen F_{R} und F_{L} gekennzeichnet.

Die Ritzelwelle 40 ist durch Federn 60, 60' axial vorgespannt, wie dies durch die Bezugszeichen F_{F} gekennzeichnet ist. Die durch die Federn 60, 60' erzeugte Federkraft ist identisch.

Sind die Drehmomente T_{R} und T_{L} bei beiden Halbflügelwellen 5, 5' identisch, wie dies der Fall ist, wenn weder ein Klemmen auftritt noch ein Wellenbruch, sind die durch die Schrägverzahnung entstehenden gegensinnigen Axialkräfte F_{R} und F_{L} gleich groß, d.h. im Gleichgewicht. Die Ritzelwelle 40 bleibt in diesem Fall in der in Figur 4 dargestellten Position, d.h. ortsfest.

Tritt jedoch eine Differenz zwischen den in den Halbflügelwellen 5, 5' wirkenden Drehmomenten auf, werden auch die resultierenden Axialkräfte F_{R} und F_{L} unterschiedlich, wodurch eine resultierende Stellkraft entsteht, die zunächst durch die Federn 60, 60' reagiert wird. Wird die Drehmomentdifferenz größer, führt dies zu einer axialen Verstellung der Ritzelwelle 40, die so groß ist, dass einer der Sensoren oder Schalter 70, 70' betätigt wird. Alternativ oder zusätzlich kann vorgesehen sein, dass eine in der Figur nicht dargestellte mechanische Bremse ausgelöst wird.

Bei Betätigung eines der Sensoren oder Schalter 70, 70' wird die Antriebseinheit 1 abgeschaltet oder durch die mechanische Bremse blockiert. In beiden Fällen wird ein weiterer Anstieg des Wellenmomentes in den Halbflügeln verhindert.

Entsprechendes gilt für einen Wellenbruch, der zu einem Drehmomentabfall in dem betroffenen Halbflügel führt. Auch in diesem Fall kann die Antriebseinheit 1 abgeschaltet oder blockiert werden. Gleichzeitig kann das Signal des betätigten Sensors 70, 70' genutzt werden, um Sicherheitsbremsen zu aktivieren, die beispielsweise an den Flügelspitzen angeordnet sind, um das System in einem sicheren Zustand zu arretieren. Ein Sonderfall tritt allerdings auf, wenn beide Wellenstränge gleichzeitig blockieren. In diesem Fall entsteht keine Drehmomentdifferenz, so dass auch kein Fehler erkannt werden kann. Jedoch sind die in den Transmissionen aufzunehmenden Antriebsdrehmomente vorzugsweise auf 50% der Momentenkapazität der Antriebseinheit limitiert, da im Falle einer unsymmetrischen Lastverzweigung ja wieder eine Differenz der Drehmomente wirkt.

Mit der in den Figuren dargestellten Topologie werden folgende Vorteile erreicht:
- Entfall einer Vielzahl von Stations- und Halbsystemdrehmomentbegrenzern
- Deutlich verringerte Wellendrehmomente im Klemmfall
- Frühzeitiges Erkennen von Wellenstrangunterbrechungen
- Geringere Systembeschaffungskosten
- Geringere Systembetriebskosten (Wartung)
- Erhöhte Systemzuverlässigkeit

Figur 4 zeigt ein Antriebssystem gemäß der vorliegenden Erfindung mit redundanten Lastpfaden. Wie dies aus Figur 4 hervorgeht, sind einem Abzweiggetriebe 6 jeweils zwei Aktuatoren 8 und zwei Führungsgetriebe 9 zugeordnet. Grundsätzlich wäre auch denkbar, eine andere Anzahl von Führungsgetrieben als Aktuatoren vorzusehen. Denkbar wäre in diesem Fall z. B. auch der Einsatz eines Führungsgetriebes. Selbstverständlich ist die Erfindung nicht auf zwei Aktuatoren und Führungsgetriebe beschränkt, auch eine andere Anzahl ist grundsätzlich denkbar. Wie dies des weiteren aus Figur 4 hervorgeht, sind in den Abzweiggetrieben 6 Vergleichsvorrichtungen angeordnet, die als mechanisch arbeitendes Bauteil 11 ausgeführt sind, was nicht unter die Erfindung fällt.
Mit Integration dieser Anordnung in jedes der Abzweiggetriebe 6 lässt sich im geschlossenen Momentenkreis der oben genannte Kraftkonflikt lösen. Dies ist darauf zurückzuführen, dass der Kraftkonflikt in den Getrieben Drehmomente mit unterschiedlichen Vorzeichen bewirkt. Diese Momentendifferenz kann durch eine axiale Bewegung der in Figur 3 dargestellten Ritzelwelle 40 ausgeglichen werden, in dem das höher belastete Stirnrad während der Axialbewegung der Ritzelwelle 40 um die Steigung der Schrägverzahnung zurückbleibt, während das geringer belastete Rad eine Voreilung erfährt.

Da der Momentenkreis geschlossen ist, entsteht über die Weichheiten des Systems der Momentenausgleich. Dabei gilt, dass je steifer die Lastpfade sind, je weniger Winkeldifferenz von der Vorrichtung erzeugt werden muss. Erst wenn eine maximal zulässige Differenz der Drehmomente überschritten ist, wird eine Abschaltung über die Schalter 70 bzw. 70' wirksam.

Eine weitere luftfahrttypische Sicherheitsanforderung besteht darin, dass ein Ausfall eines der parallel angeordneten Lastpfade sicher detektiert werden muss (Verbot "schlafender Fehler"). In aus dem Stand der Technik bekannten Lösungen werden hierfür elektrische Sensoren oder auch mechanische Anzeigen eingesetzt.

Die in Figur 4 dargestellte Anordnung detektiert auch Drehmomentdifferenzen, die durch Klemmen oder Unterbrechung eines der lasttragenden Pfade in der Antriebsstation ausgelöst werden. Dies ist durch Einsatz der mechanischen Vorrichtung gemäß Figur 3 (nicht erfindungsgemäß) sowie auch mit elektrischen Drehmomentsensoren (erfindungsgemäß) denkbar. Die Anordnung gemäß Figur 4 ist somit nicht auf den Einsatz mechanischer Vergleichsvorrichtungen beschränkt.

Auch in dieser Anordnung sind im Falle eines gleichzeitigen Klemmens beider Lastpfade 50% des Antriebsmoments pro Lastpfad aufzunehmen. Der gleichzeitige Bruch beider Lastpfade ist sicherheitstechnisch zu vernachlässigen, da an der Systemauslegung dieser Fall durch andere Maßnahmen, wie beispielsweise durch die Dissimilarität ausgeschlossen wird.

In dem in Figur 4 dargestellten Ausführungsbeispiel mit redundanten Lastpfaden sind alle Lastbegrenzer bzw. Abzweiggetriebe 6 mit Drehmomentdifferenzsensoren ausgestattet.

## Patentansprüche

1. Flugzeughochauftriebsystem mit
einer Antriebseinheit (1) zum Betrieb der Hochauftriebssysteme der Halbflügel (Halbflügelsysteme), sowie
einer Überlastsicherung zur Vermeidung unerwünscht hoher Betriebsmomente in den Halbflügelsystemen, wobei die Überlastsicherung eine Vergleichseinrichtung aufweist, die an beiden Halbflügeln einen Drehmomentsensor (12) an dem wurzelseitigen Ende einer Transmission (5) des Halbflügels umfasst, und
die Überlastsicherung eine Begrenzungseinrichtung aufweist, die mit der Vergleichseinrichtung in Verbindung steht und mittels derer die Antriebseinheit (1) blockierbar, abschaltbar oder abregelbar ist und/oder das Moment der Antriebseinheit (1) in die Flugzeugstruktur ableitbar ist, wobei
die Vergleichseinrichtung durch eine elektronische Auswerteeinheit (13) gebildet ist, die in Verbindung mit den Drehmomentsensoren (12) und mit der Begrenzungseinrichtung steht, und die dazu ausgelegt ist, die Augenblickswerte dieser Drehmomente zu vergleichen, eine Differenz zwischen den Drehmomenten festzustellen, diese Differenz mit einem Grenzwert zu vergleichen, und, wenn diese Differenz den Grenzwert übersteigt, die Begrenzungseinrichtung zu betätigen, um die Antriebseinheit (1) zu blockieren, abzuschalten oder abzregeln und/oder das Moment der Antriebseinheit (1) in die Flugzeugstruktur abzuleiten.

2. Flugzeughochauftriebsystem nach einem der vorhergehenden Ansprüche, **dadurch gekennzeichnet, dass** keine Halbflügeldrehmomentbegrenzer und/oder dass keine Stationsdrehmomentbegrenzer vorgesehen sind.

3. Flugzeughochauftriebsystem nach einem der vorhergehenden Ansprüche, **dadurch gekennzeichnet, dass** die Vergleichseinrichtung und die Begrenzungseinrichtung durch zwei unterschiedliche oder durch ein und dasselbe Bauteil oder durch eine Baugruppe gebildet werden.

## Claims

1. An aircraft high-lift system comprising
a drive unit (1) for operating the high-lift systems of the half wings (half-wing systems), and
an overload protection to avoid undesirably high operating torques in the half-wing systems,
wherein the overload protection includes a comparator which at both half wings comprises a torque sensor (12) at the root-side end of a transmission (5) of the half wing, and
the overload protection includes a limiter which is connected with the comparator and by means of which the drive unit (1) can be blocked, shut down or deactivated and/or the torque of the drive unit (1) can be dissipated into the aircraft structure, wherein
the comparator is formed by an electronic evaluation unit (13) which is connected with the torque sensors (12) and with the limiter, and which is designed to compare the instantaneous values of these torques, to determine a difference between the torques, to compare this difference with a limit value and, when this difference exceeds the limit value, actuate the limiter in order to block, shut down or deactivate the drive unit (1) and/or dissipate the torque of the drive unit (1) into the aircraft structure.

2. The aircraft high-lift system according to any of the preceding claims, **characterized in that** no half-wing torque limiters and/or no station torque limiters are provided.

3. The aircraft high-lift system according to any of the preceding claims, **characterized in that** the comparator and the limiter are formed by two different components or by one and the same component or by an assembly.

## Revendications

1. Système hypersustentateur d'avion comportant
une unité d'entraînement (1) pour faire fonctionner les systèmes hypersustentateurs des demi-ailes (systèmes demi-aile), et
une protection de surcharge pour éviter des couples de fonctionnement indésirablement élevés dans les systèmes demi-aile,
dans lequel la protection de surcharge comprend un comparateur, qui sur les deux demi-ailes comporte un capteur de couple (12) à l'extrémité côté racine d'une transmission (5) de la demi-aile, et
la protection de surcharge comprend un limiteur, qui est relié au comparateur et au moyen duquel l'unité d'entraînement (1) peut être bloquée, arrêtée ou désactivée et/ou le couple de l'unité d'entraînement (1) peut être dissipé dans la structure d'avion,
le comparateur étant formé par une unité d'évaluation électronique (13), qui est reliée au capteurs de couple (12) et au limiteur, et qui est conçue pour comparer les valeurs instantanées de ces couples, pour déterminer une différence entre les couples, pour comparer cette différence avec une valeur limite et, quand cette différence dépasse la valeur limite, actionner le limiteur afin de bloquer, arrêter ou désactiver l'unité d'entraînement (1) et/ou dissiper le couple de l'unité d'entraînement (1) dans la structure d'avion.

2. Système hypersustentateur d'avion selon l'une quelconque des revendications précédentes, **caractérisé en ce qu'**il n'y a pas prévu des limiteurs de couple des demi-ailes et/ou des limiteurs de couple de station.

3. Système hypersustentateur d'avion selon l'une quelconque des revendications précédentes, **caractérisé en ce que** le comparateur et le limiteur sont formés par deux composants différents ou par un seul et même composant ou par un assemblage.
